# EUROPÄISCHE PATENTSCHRIFT

(11) **EP 4 174 279 B1**
(45) Veröffentlichungstag und Bekanntmachung des Hinweises auf die Patenterteilung: **11.12.2024**
(21) Anmeldenummer: 22201550.5
(22) Anmeldetag: 14.10.2022
(51) Int. Cl.: E06B 9/384, E06B 9/386, H02S 20/26

(54) **BESCHATTUNGSEINRICHTUNG MIT EINEM STROMABFÜHRUNGSSYSTEM**
SHADING DEVICE WITH A CURRENT DISCHARGE SYSTEM
DISPOSITIF D'OMBRAGE AVEC UN SYSTÈME D'ÉVACUATION DE COURANT

(30) Priorität: 26.10.2021 DE 102021127794
(43) Veröffentlichungstag der Anmeldung: 03.05.2023
(73) Patentinhaber: Solaregy UG, 40885 Ratingen (DE)
(72) Erfinder: Haid, Morris, 40885 Ratingen (DE); Legermann, Florian, 40885 Ratingen (DE); Albrecht, Miriam, 89312 Günzburg (DE); Anich, Ronald, 89312 Günzburg (DE); Nieß, Reiner, 89567 Sontheim (DE)
(74) Vertreter: Dr. Binder & Binder GbR

(56) Entgegenhaltungen:
- WO-A1-2020/078548
- WO-A1-2021/204358
- CN-Y- 201 071 671

## Beschreibung

Die Erfindung betrifft eine Beschattungseinrichtung, mit einer Vielzahl von Lamellen mit Photovoltaikelementen zur Stromerzeugung und mit einem Stromabführungssystem.

Aus dem Stand der Technik sind Raffstoren mit Lamellen, auf denen Photovoltaikelemente (auch Photovoltaikzellen genannt) aufgebracht sind, bereits bekannt. Hierzu wird beispielsweise auf die Druckschriften DE 10 2007 031 236 A1 oder DE 10 2014 200 359 A1 verwiesen.

Weiterhin ist es aus der Druckschrift DE 21 2019 000 358 U1 bekannt, zur Stromabführung die Lamellen mittels eines Leiterdrahtes zu verbinden. Dieser Leiterdraht ist jedoch optisch unschön und wirkt sich nachteilig auf die Handhabung und Funktionalität des Raffstores aus.

Aus der Druckschrift CN 201071671 Y ist ein Stromabführungssystem mit durch Aussparungen in den Lamellen hindurch verlaufenden Sammelschienen bekannt. Die elektrische Kontaktierung der Sammelschienen erfolgt über einen elektrisch leitenden Ring, welcher die Aussparung bildet und um die Sammelschiene herum angeordnet ist, sowie mehrere Drähte beziehungsweise eine Art elektrisch leitende Bürste, die den Kontakt zwischen Ring und Sammelschiene herstellen.

Als weiteren Stand der Technik wird noch auf die Druckschriften DE 15 09 995 A, EP 3690176 A1, WO 2021/204358 A1 und WO 2020/078548 A1 verwiesen. Es ist daher Aufgabe der Erfindung eine alternative Stromabführung für eine Beschattungseinrichtung mit Photovoltaiklamellen sowie eine Beschattungseinrichtung hierfür bereitzustellen.

Diese Aufgabe wird durch die Merkmale des unabhängigen Anspruchs 1 gelöst.

Vorteilhafte Weiterbildungen der Erfindung sind Gegenstand untergeordneter Ansprüche.

Die Erfinder haben erkannt, dass es eine alternative Möglichkeit gibt, die in den Photovoltaikelementen auf den beweglichen Lamellen eines Raffstores oder einer Jalousie erzeugte elektrische Energie an ein Stromnetz oder Stromspeicher abzuführen und die Nachteile des Standes Technik zu umgehen.

Die Erfindung beschreibt daher die Möglichkeit der Stromabführung über eine elektrisch leitende Stange, welche durch die Aussparungen in den Lamellen verläuft, wobei in den Aussparungen elektrisch leitende Schleifkontakte vorliegen, die mit den Photovoltaikelementen elektrisch verbunden sind. Eine aufwändige Verdrahtung der einzelnen Lamellen ist somit nicht mehr notwendig.

Bei einem seilgeführten Raffstore kann das Führungsseil als elektrischer Leiter beziehungsweise Sammelschiene ausgelegt werden. Schleifkontakte können auf den Lamellen um oder in den jeweils zwei Aussparungen beziehungsweise Stanzungen für das Führungsseil positioniert werden. Hierbei stellt die eine Seite den spannungsführenden Leiter (+) und die andere Seite den 0V-Leiter (-) dar.

Als Ausführungsbeispiel kann die Stromabführung über eine Kupferrundstange erfolgen, welche vertikal durch eine Ausstanzung der Lamellen geführt wird. Präferiert wird jeweils eine Kupferrundstange auf der linken und auf der rechten Seite des Raffstores eingebaut, um dem Leitungs-Layout der Zellen zu entsprechen (Plus- und Minuspol). Die Kupferrundstange kann ebenfalls in einer geteilten Form verbaut werden, welche aus zwei mit Isolator zusammengefügten halben Rundstangen besteht. Messing ist als Material für die Rundstange ebenfalls geeignet.

An der Rundstange schleift ein Stromschleifer, der den elektrischen Kontakt herstellt. Dieser Schleifer kann in Form einer Bürste, einer Litze, eines Bügels oder eines Ringes ausgeführt werden. Insofern die Stange aus zwei isolierten Halbrundstangen aufgebaut ist, wird der Schleifer jeweils nur mit einer der beiden Halbrundstangen Kontakt herstellen. Alternativ kann er in doppelter Ausführung vorliegen, wobei nur eine dieser Ausführungen genutzt wird. Dieses Konzept behält die Symmetrie bei und kann für die Robustheit der Konstruktion sinnvoll sein.

Die Befestigung des Schleifers ist am besten flexibel, sodass Drehungen, vertikale und horizontale Verschiebungen der Lamellen toleriert werden. Ein Ring kann hierfür mittels vier elastischer Fäden, welche jeweils um 90° versetzt am Ring sitzen, an der Aussparung befestigt sein.

Im Folgenden wird noch eine Variante mit zwei als halbrunden Stäben ausgebildeten Sammelschienen und einem Schleifkontakt mit zwei Schleifbelägen beschrieben.

Zwischen den beiden Halbrundstangen befindet sich ein elektrischer Isolator. Die Halbrundstangen können jeweils auf eine Seite des Isolators aufgeklebt werden, wobei der Isolator entweder bündig mit den Kanten der Halbrundstangen abschließt oder etwas übersteht. Durch diesen Aufbau wird eine galvanische Isolation der beiden Halbrundstangen gewährleistet.

Die Halbrundstangen werden jeweils unter und über dem Behang fixiert. Dies geschieht durch Halterungen, die entweder aus einem nicht-leitenden Material gefertigt werden können oder durch einen isolierenden Einsatz ebenfalls die galvanische Trennung der Halbrundstangen gewährleisten. Der Einsatz kann etwas über die Halterung hinausstehen, wodurch auch bei einer Wasserschicht auf der Halterung eine Isolation bestehen bleibt.

Die Stromabführung an einen Verbraucher, zum Beispiel einen Wechselrichter, einen Stromspeicher oder ähnliches, kann vor allem über die obere Halterung bewerkstelligt werden, indem beispielsweise Kabel mittels Verlötung fixiert und kontaktiert werden.

Der Schleifkontakt umfasst einen Manschetten-artigen, ringförmigen Schleiferkörper, seitliche Führungs- oder Fixierstifte, mindestens einen Schleifbelag(/-pad), mindestens eine Anpressfeder und einen Halteklips. Die Anpressfedern und die Schleifbeläge werden in den Schleiferkörper eingesetzt.

Die Führungsstifte des Schleiferkörpers können in die Halteklipse eingeklipst werden, welche auf der Lamelle befestigt sind. Durch diesen Aufbau werden das Schwenken der Lamelle und eine seitliche Verschiebung toleriert. Die Schleifbeläge können jeweils mit einem Kabel verlötet werden, welches mit den Photovoltaikelementen verbunden ist.

Auf den Lamellen können unterschiedliche Photovoltaikelemente verwendet werden. Die verschiedenen Konzepte zu den Photovoltaiklamellen lassen sich nach den verschiedenen Techniken der verwendeten Photovoltaikelemente gliedern. Photovoltaikelemente der ersten Generation (waferbasierte Photovoltaikelemente) und Photovoltaikelemente der zweiten Generation zeichnen sich dadurch aus, dass sie nicht die Shockley-Queisser (SQ)-Grenze für Einzel-Bandabschnitt-Geräte überschreiten. Photovoltaikelemente der dritten Generation weisen hingegen ein Wirkungsgradpotenzial oberhalb der SQ-Grenze auf. Durch die SQ-Grenze wird der maximal erreichbare Umwandlungswirkungsgrad der Sonnenenergie für ein bestimmtes Material beschrieben. Die Grenze ist der Maßstab, an dem neue Photovoltaik-Technologien verglichen werden. Ein bestimmtes Material hat eine bestimmte Bandlücke, die dafür verantwortlich ist, dass nur bestimmte Spektren des Lichts absorbiert werden können. Die restlichen Spektren können so nicht absorbiert und damit auch nicht zur Umwandlung in elektrischen Strom genutzt werden (Photovoltaikelemente der ersten und zweiten Generation). Photovoltaikelemente der dritten Generation umgehen diese Tatsache beispielsweise durch sogenannte Tandemphotovoltaikelemente, bei denen mehrere Materialien in verschiedenen Schichten verwendet werden, um die restlichen Spektren des Lichts ebenfalls absorbieren und in elektrischen Strom umwandeln zu können.

Konventionelle Photovoltaikelemente der ersten Generation:
Hier kommen Photovoltaikelemente der ersten Generation, also waferbasierte Photovoltaikelemente, zum Einsatz. Diese Technologie ist vorteilhaft, da sie bedingt durch langjährige Erforschung und ihren großen Marktanteil ein besonders hohes Maß an Langzeiterprobung und ein sehr gutes Preis-Leistungsverhältnis sowie eine sehr hohe Effizienz aufweist. Wesentlicher Nachteil ist jedoch, dass massengefertigte Photovoltaikmodule dieser Technologie nur in Größen erhältlich sind, die nicht auf die Lamellen aufzubringen sind. Daher müssen mit konventionellen Photovoltaikelementen bestückte Lamellen so hergestellt werden, dass die Photovoltaikelemente auf den Rohlamellen selbst zu einem Modul verschaltet und laminiert werden. Da einzelne Standardphotovoltaikelemente zu groß für die Lamellen sind, müssen diese durchgeschnitten werden.

Photovoltaikelemente der zweiten und dritten Generation:
Diese Photovoltaikelemente bringen den Vorteil mit sich, dass sie teilweise bedingt durch andere Herstellungsverfahren mit deutlich weniger Modifikationen des Herstellungsprozesses in nahezu beliebigen Größen hergestellt werden können. Dadurch kann die vorhandene Oberfläche der Lamelle ohne Freiräume und damit effizienter genutzt werden. Ein entscheidender Nachteil ist hingegen, dass Photovoltaikelemente der zweiten und dritten Generation nach dem aktuellen Stand der Technik bezüglich ihrer Effizienz häufig noch nicht mit den Photovoltaikelemente der ersten Generation konkurrieren können. Einige Herstellungsprozesse erlauben es, die als Dünnschicht ausgeprägte Photovoltaikzellenschicht direkt auf den Lamellen, die damit als Substrat fungieren, aufzudampfen. Dafür ist es eventuell förderlich, die Lamellen im Vorhinein zu beschichten, sodass diese geeignetere Eigenschaften für ihre Rolle als Substrat aufweisen. Zu den während des Herstellprozesses eingesetzten Verfahren gehören das thermische Verdampfen, die Sputterdeposition, die Laserdeposition und die Metallorganische Gasphasenepitaxie.

Klebende Photovoltaikelemente der zweiten und dritten Generation:
Hier werden ebenfalls Photovoltaikelemente der zweiten und dritten Generation verwendet, die allerdings nicht auf der Lamelle selbst, sondern auf einer Folie hergestellt und anschließend auf die Lamellen aufgeklebt werden. Dieses Konzept bringt den entscheidenden Vorteil mit sich, dass eine räumliche Trennung zwischen der Produktion der Lamellen und der Produktion der Photovoltaikelemente möglich ist. Die Photovoltaikfolie kann als Meterware hergestellt und in der korrekten Breite vorgelagert und passend zugeschnitten werden.

Zudem können auch unterschiedliche Lamellen verwendet werden. Durch die Verwendung von im Aufbringungsbereich der Photovoltaikelemente weniger gebogenen Lamellen, beispielsweise Flachlamellen, können sich positive Effekte ergeben. Zum einen müssen sich die Photovoltaikelemente nur an eine weniger stark ausgeprägte Biegung anpassen, was den Produktionsprozess erleichtert sowie die Anforderungen an die Photovoltaikelemente selbst herabsetzt. Zum anderen können die Photovoltaikelemente einfacher vor äußeren Einflüssen geschützt werden. Entscheidend ist es, dass die Verkapselung der Photovoltaikzellenschicht an den Rändern der Lamellen ausreichend stark und zuverlässig anhaftet, damit sie ihre verkapselnde Wirkung entfalten kann. Da es durch Ausdehnung beziehungsweise Kontraktion der Lamellen zu Ablösungen an Schwachstellen, wie den Rändern, kommen kann, bietet es sich an, hier gesonderte Vorkehrungen zu treffen. Beispielsweise kann die Verkapselung um eine oder mehrere äußere Kanten der Lamellen umgeschlagen werden, sodass die Folie ebenfalls auf der Unterseite der Lamelle anhaften kann. Da die Flachlamelle über keine Bördelung an den äußeren Kanten verfügt, ist das Umschlagen der Folie ohne Probleme möglich. Bei einer randgebördelten Lamelle würde sich die Folie nicht ohne Probleme umschlagen und laminieren lassen und die Pakethöhe würde weiter steigen, da die Folie über die Bördelung reichen und somit die dickste Stelle der Lamelle weiter verdicken würde. An der Unterseite kann die Folie dann durch weitere, mögliche Verfahren wie zum Beispiel Kleben besonders stark befestigt werden.

Demgemäß schlagen die Erfinder vor, eine Beschattungseinrichtung, insbesondere Raffstore oder Jalousie, mit einer Vielzahl von Lamellen mit Photovoltaikelementen zur Stromerzeugung und mit einem Stromabführungssystem, mit mindestens zwei Sammelschienen, welche durch Aussparungen in den Lamellen hindurch verlaufen und diese elektrisch leitend miteinander verbinden, um den in den Photovoltaikelementen erzeugten Strom abzuführen, wobei in den Aussparungen der Lamellen Schleifkontakte angeordnet sind, die elektrisch leitend mit den Photovoltaikelementen verbunden sind, und die eine elektrische Verbindung der Photovoltaikelemente (7a) zu den Sammelschienen herstellen, wobei die Schleifkontakte jeweils als ein Manschetten-artiger, ringförmiger Schleiferkörper ausgebildet sind, welcher die jeweilige(n) Sammelschiene(n) umschließt und in dem mindestens ein Schleifbelag vorliegt, welcher mit den Photovoltaikelementen der Lamelle elektrisch verbunden ist, dahingehend zu verbessern, dass der Schleiferkörper an der jeweiligen Lamelle in Längsrichtung der Lamelle beweglich gelagert ist.

Das Stromabführungssystem dient dazu, den in der Photovoltaikelementen der Lamellen erzeugten Strom in ein Stromnetz oder einen Stromspeicher einzuspeisen. Je nach Ausführung des Stromabführungssystems ist vorteilhafterweise zusätzlich noch ein Wechselrichter vorgesehen. Bei der Beschattungseinrichtung handelt es sich bevorzugt um einen Raffstore oder eine Jalousie, insbesondere eine Jalousienüberdachung. Im Folgenden wird die Erfindung an einer als Raffstore ausgebildeten Beschattungseinrichtung beschrieben.

Die Lamellen des Raffstores sind wie bei herkömmlichen Raffstoren mittels der an den kurzen Längsenden angebrachten Führungsbolzen in seitlichen Führungsschienen beweglich gelagert. Beim Hoch- und Runterfahren oder Kippen der Lamellen bewegen sich die Führungsbolzen in den Führungsschienen. Weiterhin weist die Beschattungseinrichtung, insbesondere der Raffstore, mindestens ein Zugelement zum Bewegen der Lamellen auf. Vorteilhafterweise sind zwei Zugelemente in Form von Zugseilen, -schnüren oder -bändern vorhanden, die vorzugsweise im Bereich der beiden Längsenden der Lamellen angeordnet sind. Mittels der Zugbänder können die Lamellen sowohl hoch und runter bewegt als auch um ihre Längsachse gekippt werden.

Die Stromabführung über durch die Lamellen verlaufende Sammelschienen kann selbstverständlich mit anderen Arten, den in den Photovoltaikelementen erzeugten Strom abzuführen, beispielsweise mittels Sammelschienen in den Führungsschienen, kombiniert werden.

Besonders einfach gestaltet verlaufen durch jede Lamelle genau zwei Sammelschienen, die mit den Photovoltaikelementen elektrisch verbunden sind. Es können jedoch auch mehr Sammelschienen durch die Lamellen verlaufen, wobei nicht zu jeder Lamelle eine elektrische Verbindung vorliegt. Dadurch sind unterschiedliche Arten der Serienschaltung der Lamellen zur Spannungserhöhung möglich. Beispielsweise ist eine Sammelschiene jeweils abwechselnd mit den Lamellen elektrisch verbunden oder die Lamellen sind gegenüber der Sammelschiene isoliert. Erfindungsgemäß verlaufen jedoch die Sammelschienen durch alle Lamellen, auch wenn nicht zu jeder Lamelle ein elektrischer Kontakt vorliegt. Bei einer Ausführungsform mit nur zwei Sammelschienen liegen diese vorteilhafterweise auf dem gleichen Potential.

Die Sammelschienen sind bevorzugt stationär ausgebildet. Um zu ermöglichen, dass die Sammelschienen durch die Lamellen hindurch verlaufen, weisen die Lamellen jeweils Aussparungen beziehungsweise Durchbrüche oder Löcher auf, durch die die Sammelschienen geführt sind. Die Aussparungen sind bevorzugt in der Nähe der Längsenden der Lamellen angeordnet. Dabei können in den Aussparungen entweder elektrische Kontakte zu den Sammelschienen vorliegen oder die Aussparungen weisen eine Isolierung gegenüber den Sammelschienen auf, um einen elektrischen Kontakt zu verhindern.

Eine einfache Ausführungsform sieht vor, dass die Lamellen jeweils zwei Aussparungen aufweisen, durch die jeweils eine Sammelschiene verläuft, wobei die beiden Sammelschienen auf unterschiedlichem Potential liegen.

Grundsätzlich ist es auch möglich, dass durch eine Aussparung mehr als eine Sammelschiene verläuft und die einzelnen Sammelschienen unterschiedlich kontaktiert werden und zum Beispiel auch auf unterschiedlichem Potential liegen. Eine andere Ausführungsform sieht daher vor, dass durch eine Aussparung zwei Sammelschienen verlaufen, die jeweils auf unterschiedlichem Potential liegen. In diesem Fall kann beispielsweise zu einer Sammelschiene eine elektrische Verbindung vorliegen, während die andere Sammelschiene in dieser Lamelle elektrisch isoliert ist.

In einer besonders bevorzugten Ausführungsform sind die Sammelschienen als längliche Stangen beziehungsweise Stäbe ausgeführt. Die Stangen sind vorzugsweise rund ausgebildet, können jedoch auch eckig ausgebildet sein. Eine weitere Ausführungsform sieht vor, dass die Sammelschienen als Stangen mit halbem Querschnitt ausgeführt sind. Im Folgenden werden derartige Stangen beziehungsweise Sammelschienen als Halbstangen bezeichnet. Eine Halbstange ist vorzugsweise halbrund beziehungsweise eckig mit einem, im Vergleich zu einer einfachen Stange, nur halbem Querschnitt. Bevorzugt sind zwei halbrunde Halbstangen ausgebildet, deren ebene Seiten zueinander orientiert sind, sodass sich eine zweigeteilte runde Stange ergibt. Die Halbstangen können entweder auf einem gleichen Potential liegen oder auf zwei unterschiedlichen Potentialen. Liegen die Halbstangen auf unterschiedlichem Potential, ist zwischen den beiden Hälften beziehungsweise Halbstangen vorteilhafterweise ein Isolator angeordnet. Die Halbstangen sind beispielsweise flächig an den Isolator geklebt.

Die Sammelschienen sind grundsätzlich aus einem möglichst gut leitfähigen Material ausgebildet. Hierfür eignet sich in einer bevorzugten Ausführungsform ein Metall oder eine Legierung, beispielsweise (aus) Kupfer, Messing oder Aluminium.

Zum Abführen des in den Photovoltaikelementen erzeugten Stromes sind in den Aussparungen der Lamellen Schleifkontakte angeordnet, die elektrisch leitend mit den Photovoltaikelementen verbunden sind. Die Schleifkontakte bewegen sich beim Hoch-und Runterziehen der Lamellen mit diesen mit entlang der/den Sammelschiene(n). Der elektrische Kontakt von den beweglichen Lamellen beziehungsweise Schleifkontakten zu den stationären Sammelschienen wird vorteilhafterweise beim Kippen beziehungsweise Drehen der Lamellen aufrechterhalten.

In einer Ausführungsform mit nur einer Sammelschiene in einer Aussparung werden die Sammelschienen vorteilhafterweise jeweils von zumindest zwei gegenüberliegenden Seiten kontaktiert. Dies ermöglicht eine bessere und zuverlässigere Kontaktierung mit einem gleichmäßigen Andrücken von zwei gegenüberliegenden Seiten. Ebenfalls ist es vorteilhaft, wenn die Schleifkontakte federgelagert ausgeführt sind.

Die erfindungsgemäße Ausführungsform eines Schleifkontaktes sieht vor, dass ein Manschetten-artiger, ringförmiger Schleiferkörper ausgebildet ist, welcher die Sammelschienen umschließt und in dem mindestens ein Schleifbelag vorliegt, welcher mit den Photovoltaikelementen der Lamelle elektrisch verbunden ist. Der Schleiferkörper ist vorteilhafterweise elektrisch isolierend ausgebildet. Je Schleiferkörper kann ein Schleifbelag vorliegen, wenn in der Aussparung eine Sammelschiene vorliegt. Oder es können je Schleiferkörper zwei Schleifbeläge vorliegen, wenn durch die Aussparung zwei Sammelschienen geführt sind, die jeweils auf unterschiedlichem Potential liegen und daher von den Schleifbelägen jeweils separat kontaktiert werden. Die Schleifbeläge können mit den Photovoltaikelementen beispielsweise mittels Kabel verlötet werden. Zusätzlich können Federn in dem Schleiferkörper vorliegen, welche die Schleifbeläge an die Sammelschienen andrücken.

Der Manschetten-artige Schleiferkörper ist beweglich gelagert. Erfindungsgemäß ist der Schleiferkörper in Längsrichtung der Lamelle beweglich gelagert. Durch die bewegliche Lagerung können vorteilhafterweise Seitwärtsbewegungen der Lamellen, temperaturbedingte Längenänderungen sowie die Schwenkbewegungen der Lamellen um deren Längsachse ausgeglichen beziehungsweise ermöglicht werden. Beispielsweise weist der Schleiferkörper entlang der Lamellenlängsachse ausgerichtete Führungsstifte auf, die schwenkbar in klipsähnlichen, auf den Lamellen befestigten Halterungen gelagert sind.

Alternative Ausführungsformen der Schleifkontakte sind grundsätzlich ebenfalls möglich. Beispielsweise können die Schleifkontakte auch als Bürste, Litze, Bügel oder Ring ausgebildet sein.

Je nach Anzahl der Sammelschienen und deren Verschaltung wird nicht jede Sammelschiene in einer Aussparung elektrisch kontaktiert. In den Aussparungen kann daher ein elektrisch isolierender Einsatz ausgebildet sein, sodass die jeweilige Lamelle keinen Kontakt zu einer Sammelschiene hat oder eben gerade nur zu einer bestimmten Sammelschiene von mehreren Sammelschienen keinen Kontakt hat.

Durch die unterschiedliche Ausgestaltung der Aussparungen mit oder ohne Schleifkontakt beziehungsweise mit oder ohne Isolierung ist es zum einen möglich, mehr als zwei Sammelschienen oder Sammelschienen, die auf dem gleichen Potential liegen, auszuführen. Weiterhin können die Lamellen in unterschiedlichen Serienschaltungen mit den Sammelschienen verschaltet werden, beispielsweise können jeweils zwei oder drei Lamellen in Serie geschaltet werden.

Zur Stromabführung sind die Sammelschienen an ein Stromnetz oder eine Stromspeichereinheit angeschlossen. Vorteilhafterweise sind die Sammelschienen an ihren Enden in Halterungen fixiert, wobei an einer der Halterungen die Stromabführung erfolgt. Vorzugsweise ist an einer oberen Halterung eine Verkabelung angebracht. Die untere Halterung ist vorteilhafterweise isoliert, insbesondere auch wasser-geschützt ausgebildet.

Weiterhin ist das Stromabführungssystem vorteilhafterweise vor Witterungseinflüssen wie Regen, Sonneneinstrahlung etc. geschützt, um eine möglichst hohe Lebensdauer bei geringem Verschleiß zu gewährleisten.

Eine Ausführungsform des Stromabführungssystems sieht daher vor, dass in die Längsöffnungen der Führungsschienen zumindest abschnittsweise Gummidichtungen und/oder Bürstendichtungen eingesetzt sind. Diese Dichtungen verschließen die Längsöffnung nicht komplett, sondern erlauben ein Hoch- und Runtergleiten der Führungsbolzen durch die Dichtungen.

Vorteilhaft an Bürstendichtungen, beispielsweise aus Nylon oder Perlon, ist:
- die einfache Umsetzbarkeit durch vorgefertigte Leisten, die entlang der Längsöffnungen aufgebracht werden können;
- Bürstendichtungen sind witterungs- und wasserbeständig;
- der Austausch von Lamellen wird dadurch nicht beeinflusst; und
- Schutz in allen Positionen der Lamellen.

Allerdings können sich einzelne Borsten lösen und somit die Sammelschienen verschmutzen. Eine Bürstendichtung bietet zudem keinen vollständigen Schutz gegen das Eindringen von Feuchtigkeit und Staub.

Vorteilhaft an Gummidichtungen, beispielsweise aus einem Silikon-Kautschuk, ist:
- Schutz vor Spritzwasser und Schmutz;
- leichte Installation;
- der Austausch von Lamellen wird dadurch nicht beeinflusst;
- Schutz in allen Positionen der Lamellen.

Allerdings bestehen hohe Anforderungen an das Material der Gummidichtungen, da diese dauerhaft elastisch sein und nicht spröde werden sollten. Die Reibung der Führungsbolzen an der Dichtung ist bei einer Gummidichtung deutlich größer als bei einer Bürstendichtung.

Eine andere Ausführungsform des Stromabführungssystems sieht vor, dass zwischen den Führungsbolzen benachbarter Lamellen jeweils ein Stoffeinsatz angeordnet ist, welcher im heruntergelassenen Zustand der Lamellen aufgespannt wird und die Öffnungen der Führungsschienen zumindest teilweise abdeckt. Der verwendete Stoff ist vorteilhafterweise möglichst flexibel, witterungsbeständig und atmungsaktiv sowie wasser-und UV-dicht.

Vorteilhaft an Stoffeinsätzen ist:
- die Längsöffnungen werden staub- und wasserdicht abgedeckt;
- Installation schon mit mittlerem Aufwand möglich; und
- eingedrungene Feuchtigkeit kann wieder verdunsten.

Allerdings schützt ein Stoffeinsatz die Längsöffnung nur im heruntergefahrenen Zustand der Lamellen. Die einzelnen Stoffbereiche können materialabhängig an den Seiten ausfransen. Der Austausch einzelner Lamellen wird durch die an den Lamellen befestigten Stoffeinsätze erschwert.

In einer vorteilhaften Ausführung der erfindungsgemäßen Beschattungseinrichtung mit einer Vielzahl von Lamellen mit Photovoltaikelementen wird vorgeschlagen, dass mehrfach jeweils mindestens zwei Lamellen untereinander seriell elektrisch zu jeweils einem Lamellensatz verbunden sind, wobei die Verbindungsstellen zwischen den zwei Lamellen eines Lamellensatzes untereinander parallel über jeweils eine Sammelschiene elektrisch gekoppelt sind.

Werden in der Beschattungseinrichtung mehrere Lamellensätze verwendet, die aus jeweils zwei seriell verbundenen Lamellen bestehen, so kann dies verwirklicht werden, indem je Lamellensatz genau zwei seriell geschaltete Lamellen vorliegen, wobei:
- die potentialgleichen Verbindungsstellen zwischen der jeweils ersten Lamelle und der zweiten Lamelle eines Lamellensatzes über eine Sammelschiene auf einer ersten Seite der Beschattungseinrichtung elektrisch verbunden sind, und
- jeder Lamellensatz an je eine positive und eine negative Sammelschiene auf der zur ersten Seite gegenüberliegenden zweiten Seite der Beschattungseinrichtung elektrisch angeschlossen ist. Hieraus ergibt sich dann, dass die Lamellen bezüglich ihrer Polarität von oben nach unten alternierend angeordnet sind.

Werden in der Beschattungseinrichtung mehrere Lamellensätze verwendet, die aus jeweils drei seriell untereinander verbundenen Lamellen bestehen, so kann dies verwirklicht werden, indem ein Stromabführungssystem so gestaltet ist, dass je Lamellensatz genau drei seriell geschaltete Lamellen vorliegen, wobei:
- die potentialgleichen Verbindungsstellen zwischen den jeweils ersten Lamellen und den zweiten Lamellen über eine erste Sammelschiene auf einer ersten Seite der Beschattungseinrichtung elektrisch verbunden sind,
- die potentialgleichen Verbindungsstellen zwischen den jeweils zweiten Lamellen und den dritten Lamellen über eine zweite Sammelschiene auf einer zweiten - der ersten Seite gegenüberliegenden - Seite der Beschattungseinrichtung elektrisch verbunden sind, und
- jeder Lamellensatz an eine positive Sammelschiene und eine negative Sammelschiene auf jeweils einer Seite der Beschattungseinrichtung elektrisch angeschlossen ist.

Die Erfindung betrifft noch eine Beschattungseinrichtung, insbesondere ein Raffstore oder eine Jalousie, zumindest aufweisend einen Behang mit einer Vielzahl von Lamellen mit Photovoltaikelementen zur Stromerzeugung, wobei zur Abführung des erzeugten Stromes ein voranstehend beschriebenes Stromabführungssystem vorliegt.

Bei der Beschattungseinrichtung handelt es sich bevorzugt um einen Raffstore oder eine Jalousie, insbesondere eine Jalousienüberdachung. Die Erfindung wird weiterhin an einer als Raffstore ausgebildeten Beschattungseinrichtung beschrieben.

Der Aufbau des Raffstores entspricht dem Aufbau eines herkömmlichen Raffstores. Auf den Lamellen sind Photovoltaikelemente zur Stromerzeugung angebracht, beispielsweise als komplette Beschichtung der Lamellen oder einzelne Bereiche auf den Lamellen. Es können sowohl konventionelle Photovoltaikelemente der ersten Generation also auch Photovoltaikelemente der zweiten oder dritten Generation eingesetzt werden.

Eine Ausführungsform der Beschattungseinrichtung, insbesondere eines Raffstores, sieht vor, dass der Behang zumindest ein erstes Lamellenpaket und ein zweites Lamellenpaket umfasst, wobei die Lamellenpakete unterschiedlich um die jeweiligen Längsachsen der Lamellen gekippt sind. Bei dieser Art von Behang spricht man allgemein auch von einem zweigeteilten Behang. Vorzugsweise ist ein oberes Lamellenpaket separat von den restlichen Lamellen rotierbar beziehungsweise kippbar. Beispielsweise kann ein unterer Bereich des Behanges zur Stromerzeugung komplett geschlossen sein, während ein oberer Bereich weiterhin offen oder zumindest teilweise offen ist, um Tageslicht in einen Raum eindringen zu lassen.

Im Folgenden wird die Erfindung anhand der bevorzugten Ausführungsbeispiele mit Hilfe der Figuren näher beschrieben, wobei nur die zum Verständnis der Erfindung notwendigen Merkmale dargestellt sind.

Es zeigen im Einzelnen:
- FIG 1:: eine schematische Perspektivansicht eines Längsendes einer Lamelle mit einem Stromabführungssystem
- FIG 2:: eine schematische Perspektivansicht des Schleifkontaktes gemäß der Figur 1,
- FIG 3:: eine schematische Querschnittsansicht durch den Schleifkontakt gemäß der Figur 2 mit zwei Sammelschienen,
- FIG 4:: eine schematische Explosionsansicht des Schleifkontaktes gemäß der Figur 2 ohne Schleiferkörper,
- FIG 5:: eine schematische Perspektivansicht zweier Sammelschienen mit Halterungen an den Enden,
- FIG 6:: eine schematische Darstellung eines Raffstores mit Stromabführungssystem und einer ersten Reihenschaltung der Lamellen,
- FIG 7:: schematisch vereinfachte Darstellung der elektrischen Serienschaltung des Raffstores gemäß Figur 6
- FIG 8:: eine schematische Darstellung eines Raffstores mit Stromabführungssystem und einer weiteren Reihenschaltung der Lamellen, und
- FIG 9:: schematisch vereinfachte Darstellung der elektrischen Serienschaltung des Raffstores gemäß der Figur 8.

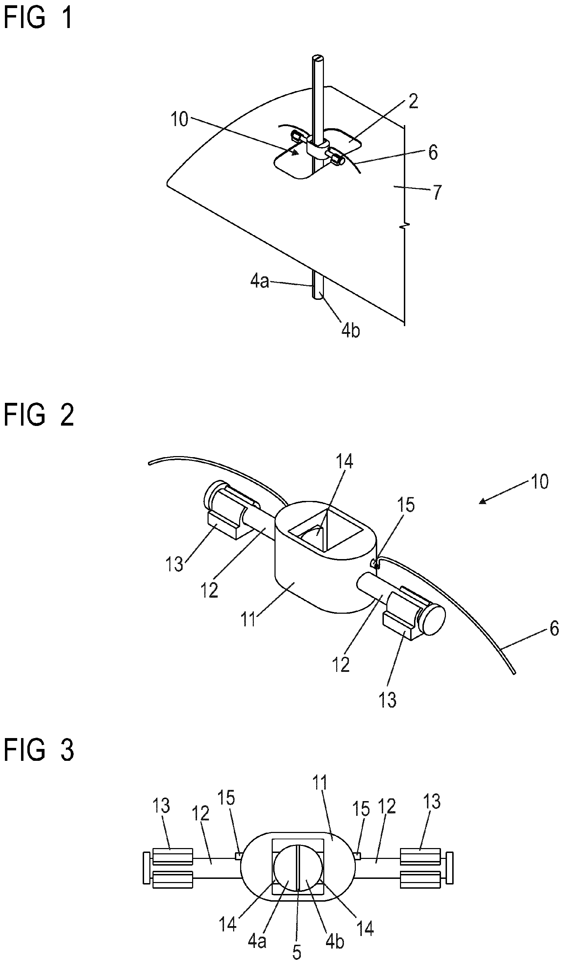

In der **Figur 1** ist eine schematische Perspektivansicht eines Längsendes einer Lamelle 7 mit einem Stromabführungssystem gezeigt. Die Lamelle 7 ist Teil einer als Raffstore ausgebildeten Beschattungseinrichtung. Zur besseren Übersicht sind der Führungsbolzen an dem Längsende der Lamelle sowie die übrigen Bauteile des Raffstores nicht dargestellt. Das auf der Lamelle 7 angeordnete Photovoltaikelement, welches den Strom erzeugt, ist hier ebenfalls nicht dargestellt. Im Bereich des Längsendes weist die Lamelle 7 eine Aussparung auf, durch welche die Sammelschienen geführt sind. In dieser beispielhaften Ausführungsform liegen zwei als halbrunde Halbstangen 4a, 4b ausgebildete Sammelschienen vor, wobei jede Halbstange 4a beziehungsweise 4b auf einem anderen Potential liegt. Zwischen den beiden Halbstangen 4a, 4b ist ein Isolator angeordnet. Weiterhin umfasst das Stromabführungssystem einen Schleifkontakt 10, welcher um die beiden Halbstangen 4a, 4b herum in der Aussparung 2 angeordnet ist. Der Schleifkontakt 10 umschließt die beiden Halbstangen 4a, 4b und stellt eine jeweils getrennte elektrische Verbindung des Photovoltaikelementes zu den Halbstangen 4a, 4b her.

In der **Figur 2** ist eine schematische Perspektivansicht des Schleifkontaktes 10 gemäß der Figur 1 gezeigt. Der Schleifkontakt 10 umfasst einen zentralen, Manschetten-artigen Schleiferkörper 11, welcher eine Öffnung aufweist, durch die die beiden Halbstangen 4a, 4b verlaufen. Der Schleiferkörper 11 ist aus einem elektrisch isolierenden Material gefertigt. In der Öffnung des Schleiferkörpers 11 sind zwei flächige Schleifbeläge 14 angeordnet, wobei jeder Schleifbelag 14 eine Halbstange 4a, 4b kontaktiert. Die Schleifbeläge 14 sind federgelagert. Weiterhin sind die Schleifbeläge 14 über Leiterstifte 15 mit der elektrischen Verbindung 6 zu den Photovoltaikelementen elektrisch verbunden.

Der Schleiferkörper 11 weist an seiner Außenseite zwei gegenüberliegend positionierte Führungsstifte 12 auf, die in Klipshaltern 13 beweglich gelagert sind. Die Führungsstifte 12 verlaufen in Längsrichtung der Lamelle 7 und können in dieser Richtung in den Klipshaltern 13 verschoben werden. An den freien Ender der Führungsstifte 12 ist jeweils eine Verdickung ausgeführt, sodass diese nicht aus den Klipshaltern 13 geschoben werden können. Die Klipshalter 13 sind auf der Lamelle 7 befestigt, zum Beispiel verklebt.

In der **Figur 3** ist noch eine schematische Querschnittsansicht durch den Schleifkontakt 10 gemäß der Figur 2 mit zwei halbrunden Sammelschienen gezeigt. Die Sammelschienen sind als Halbstangen 4a, 4b mit halbrundem Querschnitt ausgebildet. Zwischen den Halbstangen 4a, 4b ist ein Isolator eingeklebt. Die Halbstangen 4a, 4b können somit auf unterschiedlichem Potential liegen. Jede Halbstange 4a, 4b wird von einem Schleifbelag 14 kontaktiert, welcher über einen Leiterstift 15 eine elektrische Verbindung zu den Photovoltaikelementen erzeugt.

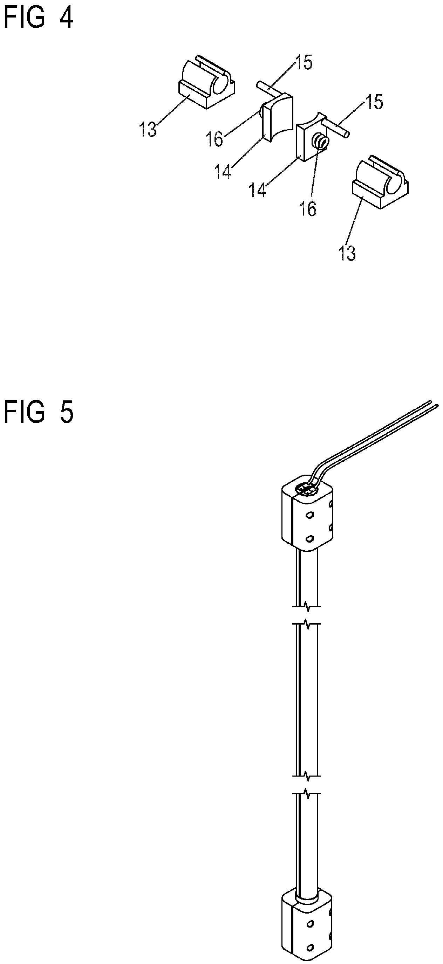

In der **Figur 4** ist eine schematische Explosionsansicht des Schleifkontaktes 20 gemäß der Figur 2 ohne Schleiferkörper 11 gezeigt. Zu sehen sind die Federn 16, welche die Schleifbeläge 14 in der Öffnung des Schleiferkörpers 11 an die Halbstangen 4a, 4b andrücken. Weiterhin sind die Leiterstifte 15 zu sehen, welche von den Schleifbelägen 14 durch den Schleiferkörper 11 hindurch ragen.

In der **Figur 5** ist eine schematische Perspektivansicht zweier als Halbstangen 4a, 4b ausgebildeter Sammelschienen mit Halterungen 20 an den Enden gezeigt. Die Halterungen 20 sind jeweils als zwei Halbschalen 21, 22 ausgebildet, welche die Enden der Halbstangen 4a, 4b umschließen. Die obere Halterung 20 ist nach oben offen, sodass an den Enden der beiden Halbstangen 4a, 4b jeweils ein Kabel angeschlossen ist, um den erzeugten Strom abzuführen. Die untere Halterung 20 umfasst die Enden der Halbstangen 4a, 4b vollständig und isoliert und schützt diese.

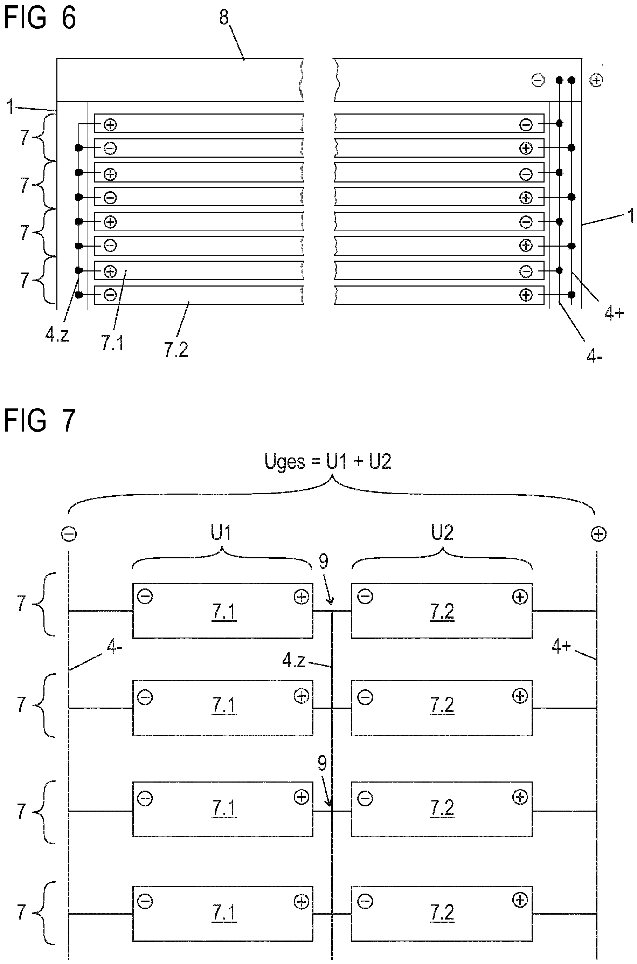

Die **Figur 6** zeigt eine Ausführungsform des oberen Teils eines Raffstores mit einem Lamellenkasten 8 und einem Behang, dessen Lamellen 7.1 und 7.2 mit Photovoltaikelementen versehen sind, die satzweise in Reihenschaltung untereinander verbunden sind und jeweils einen Lamellensatz 7 bilden. Hierbei werden Photovoltaikelemente der Lamellen satzweise mit den Sammelschienen 4+ und 4- zur Stromabfuhr verbunden, wobei je Satz eine Verbindung der Photovoltaikelemente zur Sammelschiene 4.z so hergestellt ist, dass insgesamt je Lamellensatz 7 eine serielle Verbindung zwischen den Photovoltaikelementen der jeweils zwei Lamellen 7.1 und 7.2 entsteht und damit die mit den Photovoltaikelementen erzeugte Spannung U1 und U2 zu einer Gesamtspannung Uges addiert und im Idealfalle verdoppelt wird. Wie aus der Figur 6 ersichtlich ist, verläuft dabei einseitig die Sammelschiene für das Zwischenpotential 4z links in der einen Führungsschiene 1, während die beiden Stromabfuhrschienen 4+ und 4-in der rechten Führungsschiene 1 verlaufen.

Zur übersichtlicheren Darstellung ist die schematische elektrische Schaltung der auf den Lamellen 7.1 und 7.1 angebrachten Photovoltaikelemente aus der Figur 6 nochmals in der **Figur 7** dargestellt. Hierbei ist links die negative oder auf Erde liegende Sammelschiene 4- angeordnet, von der Ableitungen auf die jeweils erste Lamelle 7.1 eines Lamellensatzes 7 abgehen. Die erste und zweite Lamelle 7.1 und 7.2 sind gemeinsam und mit umgekehrter Polarität mit der Sammelschiene 4.z verbunden, wobei dort ein gemeinsames Zwischenpotential der Spannung U1 zwischen den jeweils ersten und den zweiten Lamellen 7.1 und 7.2 anliegt. Die jeweils zweiten Lamellen 7.2 sind dann mit der positiven Seite ihrer Photovoltaikelemente mit deren Spannung U2 mit der Sammelschiene 4+ verbunden, wobei zwischen den Sammelschienen 4- und 4+ eine Gesamtspannung Uges = U1 + U2 erzeugt wird. Die beiden Sammelschienen 4+ und 4-dienen dabei zur Stromabfuhr mit dem Potential der Gesamtspannung Uges und vereinen die gesamte Stromleistung des erfindungsgemäßen Raffstores.

Der Raffstore besteht also aus einer Vielzahl von in Parallelschaltung verbundener Lamellensätze 7 aus seriell verbundenen Lamellen 7.1 und 7.2, wobei das Zwischenpotential zwischen allen ersten Lamellen 7.1 und allen zweiten Lamellen 7.2 untereinander verbunden ist.

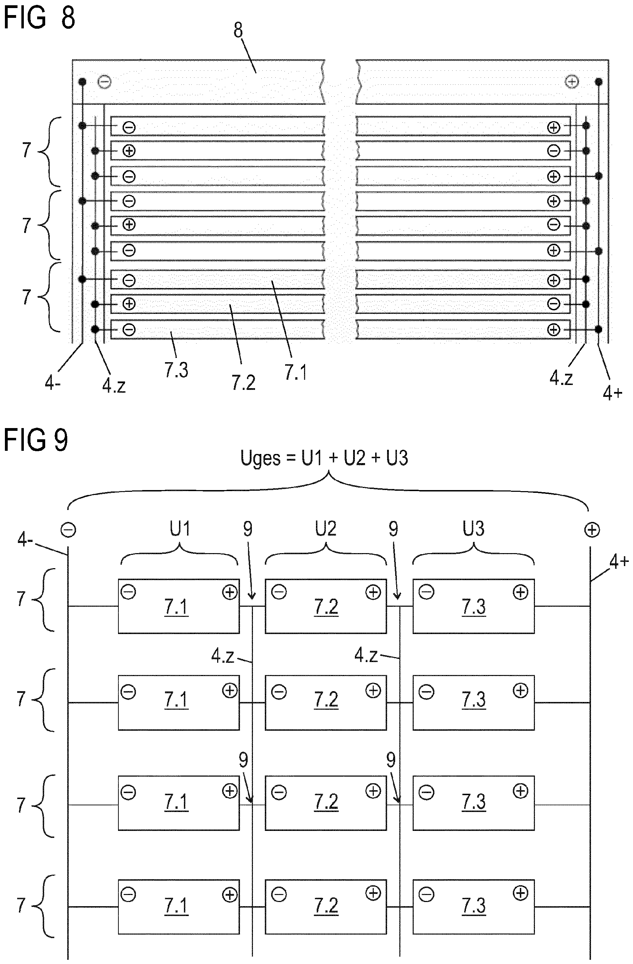

Eine andere Ausführungsform des Raffstores sieht vor, dass jeweils drei Lamellen 7.1, 7.2 und 7.3 eines Lamellensatzes 7 seriell verschaltet und insgesamt die Lamellensätze 7 des gesamten Raffstores parallel und auch die ersten, zweiten und dritten Lamellen 7.1, 7.2 und 7.3 untereinander parallel verbunden werden. Eine solche Ausführung ist beispielhaft in der **Figur 8** dargestellt. Diese zeigt den oberen Teil eines Raffstores mit einem Lamellenkasten 8 mit seitlich angeordneten Führungsschienen 1 und drei Lamellensätzen 7. Jeder Lamellensatz 7 enthält eine erste, zweite und dritte Lamelle 7.1, 7.2, und 7.3 mit jeweils darauf angeordnetem Photovoltaikelement. Rechts und links in den Führungsschienen ist jeweils eine Sammelschiene 4+ und 4- angeordnet, welche einerseits mit einem externen Stromanschluss verbunden ist und andererseits die Lamellensätze 7 elektrisch verbindet. Zusätzlich ist in den seitlichen Führungsschienen 1 jeweils eine Sammelschiene 4.z angeordnet, welche die einzelnen Lamellen 7.1 mit 7.2 und 7.2 mit 7.3 seriell und gleichzeitig alle ersten Lamellen 7.1, alle zweiten Lamellen 7.2 und alle dritten Lamellen 7.3 jeweils parallel verbindet.

Eine schematische Darstellung dieser elektrischen Schaltung aus der Figur 8 ist in der **Figur 9** gezeigt. Dort liegen vier Lamellensätze 7 vor, welche jeweils aus den drei Lamellen 7.1 bis 7.3 bestehen. Diese drei Lamellen 7.1, 7.2 und 7.3 sind je Lamellensatz 7 seriell untereinander verbunden. Gleichzeitig sind die Lamellensätze jeweils parallel über Sammelschienen 4- und 4+ verbunden. Außerdem besteht auch hier eine parallele Verbindung an den gleichen Zwischenpotentialen der einzelnen Lamellen 7.1 und 7.2 über die beiden Sammelschienen 4.z, wobei diese Sammelschienen 4.z jeweils nach außen isoliert ausgebildet sind. Auf diese Weise kann die erreichte Betriebsspannung Uges auf die Summe der Einzelspannungen U1+U2+U3 der ersten, zweiten und dritten Lamelle 7.1, 7.2 und 7.3 erhöht werden, um Übertragungsverluste möglichst gering zu halten. Gleichzeitig wird die Stromleistung der Lamellensätze 7 entsprechend deren Anzahl im Raffstore aufsummiert.

### Bezugszeichenliste

- 1: Führungsschiene
- 2: Aussparung
- 4: Sammelschiene / Stange
- 4+: positive Sammelschiene
- 4-: negative Sammelschiene
- 4.z: Sammelschiene für Zwischenpotential
- 5: Isolator
- 6: Verbindung zwischen Schleifkontakt und Photovoltaikelement
- 7: Lamellen mit Photovoltaikelementen
- 7.1: erste Lamelle mit Photovoltaikelement eines seriellen Lamellensatzes
- 7.2: zweite Lamelle mit Photovoltaikelement eines seriellen Lamellensatzes
- 7.3: dritte Lamelle mit Photovoltaikelement eines seriellen Lamellensatzes
- 8: Lamellenkasten
- 9+: positive Sammelschiene
- 9-: negative Sammelschiene
- 10: Schleifkontakt
- 11: Schleiferkörper
- 12: Führungsstift
- 13: Klipshalter
- 14: Schleifbelag
- 15: Leiterstift
- 16: Feder
- 20: Halterung
- 21: erste Halbschale
- 22: zweite Halbschale
- 23: Kabel

## Patentansprüche

1. Beschattungseinrichtung, insbesondere Raffstore oder Jalousie, mit einer Vielzahl von Lamellen (7) mit Photovoltaikelementen zur Stromerzeugung, und mit einem Stromabführungssystem mit mindestens zwei Sammelschienen (4a,4b,4+,4-,4.z), welche durch Aussparungen (2) in den Lamellen (7) hindurch verlaufen und diese elektrisch leitend miteinander verbinden, um den in den Photovoltaikelementen erzeugten Strom abzuführen, wobei in den Aussparungen (2) der Lamellen (7) Schleifkontakte angeordnet sind, die elektrisch leitend mit den Photovoltaikelementen (7a) verbunden sind und die eine elektrische Verbindung der Photovoltaikelemente (7a) zu den Sammelschienen (4a,4b,4+,4-,4.z) herstellen, wobei die Schleifkontakte jeweils als ein Manschetten-artiger, ringförmiger Schleiferkörper (11) ausgebildet sind, welcher die jeweilige(n) Sammelschiene(n) umschließt und in dem mindestens ein Schleifbelag (14) vorliegt, welcher mit den Photovoltaikelementen der Lamelle (7) elektrisch verbunden ist, **dadurch gekennzeichnet, dass** der Schleiferkörper (11) an der jeweiligen Lamelle (7) in Längsrichtung der Lamelle (7) beweglich gelagert ist.

2. Beschattungseinrichtung gemäß dem voranstehenden Patentanspruch 1, **dadurch gekennzeichnet, dass** durch jede Lamelle (7) genau zwei Sammelschienen (4) verlaufen, die mit den Photovoltaikelementen elektrisch verbunden sind.

3. Beschattungseinrichtung gemäß einem der voranstehenden Patentansprüche, **dadurch gekennzeichnet, dass** die Lamellen (7) jeweils zwei Aussparungen (2) aufweisen, durch die jeweils eine Sammelschiene (4) verläuft, wobei die beiden Sammelschienen (4) auf unterschiedlichem Potential liegen.

4. Beschattungseinrichtung gemäß einem der voranstehenden Patentansprüche, **dadurch gekennzeichnet, dass** durch eine Aussparung (2) zwei Sammelschienen (4) verlaufen, die jeweils auf unterschiedlichem Potential liegen.

5. Beschattungseinrichtung gemäß einem der voranstehenden Patentansprüche, **dadurch gekennzeichnet, dass** die Schleifkontakte (10) federgelagert ausgeführt sind.

6. Beschattungseinrichtung gemäß einem der voranstehenden Patentansprüche, **dadurch gekennzeichnet, dass** in den Aussparungen (2) ein elektrisch isolierender Einsatz ausgebildet ist.

7. Beschattungseinrichtung gemäß einem der voranstehenden Patentansprüche, **dadurch gekennzeichnet, dass** die Sammelschienen (4) an ihren Enden in Halterungen (20) fixiert sind, wobei an einer der Halterungen (20) die Stromabführung erfolgt.

8. Beschattungseinrichtung gemäß einem der voranstehenden Patentansprüche, **dadurch gekennzeichnet, dass** mehrfach jeweils mindestens zwei Lamellen (7.1, 7.2, 7.3) untereinander seriell elektrisch zu jeweils einem Lamellensatz (7) verbunden sind, wobei die Verbindungsstellen (9) zwischen den Lamellen (7.1 mit 7.2 und 7.2 mit 7.3) untereinander parallel über jeweils eine Sammelschiene (4.z) elektrisch gekoppelt sind.

9. Beschattungseinrichtung gemäß dem voranstehenden Patentanspruch 8, **dadurch gekennzeichnet, dass** je Lamellensatz (7) genau zwei seriell geschaltete Lamellen (7.1, 7.2) vorliegen, wobei:
- die potentialgleichen Verbindungsstellen (9) zwischen der jeweils ersten Lamelle (7.1) und der zweiten Lamelle (7.2) über eine Sammelschiene (4.z) auf einer ersten Seite der Beschattungseinrichtung elektrisch verbunden sind, und
- jeder Lamellensatz (7) an die positiven und negativen Sammelschienen (4+, 4-) auf der zur ersten Seite gegenüberliegenden zweiten Seite der Beschattungseinrichtung elektrisch angeschlossen sind, wobei die Polarität (+, -) der Lamellen in der Beschattungseinrichtung von oben nach unten alternierend ausgeführt ist.

10. Beschattungseinrichtung gemäß dem voranstehenden Patentanspruch 8, **dadurch gekennzeichnet, dass** je Lamellensatz (7) genau drei seriell geschaltete Lamellen (7.1, 7.2, 7.3) vorliegen, wobei:
- die potentialgleichen Verbindungsstellen (9) zwischen der jeweils ersten Lamelle (7.1) und der zweiten Lamelle (7.2) über eine erste Sammelschiene (4.z) auf einer ersten Seite der Beschattungseinrichtung elektrisch verbunden sind,
- die potentialgleichen Verbindungsstellen (9) zwischen der jeweils zweiten Lamelle (7.2) und der dritten Lamelle (7.3) über eine zweite Sammelschiene (4.z) auf einer zweiten - der ersten Seite gegenüberliegenden - Seite der Beschattungseinrichtung elektrisch verbunden sind,
- jeder Lamellensatz (7) an eine positive Sammelschiene (4+) und eine negative Sammelschiene (4-) auf jeweils einer Seite der Beschattungseinrichtung elektrisch angeschlossen ist.

11. Beschattungseinrichtung gemäß einem der voranstehenden Patentansprüche, wobei die Lamellen (7) einen Behang ausbilden, **dadurch gekennzeichnet, dass** der Behang zumindest ein erstes Lamellenpaket und ein zweites Lamellenpaket umfasst, wobei die Lamellenpakete unterschiedlich um die jeweiligen Längsachsen der Lamellen gekippt sind.

## Claims

1. Shading device, in particular a Venetian blind or slatted blind, having a plurality of slats (7) with photovoltaic elements for power generation, and having a current discharge system with at least two busbars (4a, 4b, 4+, 4-, 4.z) which run through recesses (2) in the slats (7) and connect them to one another in an electrically conductive manner, in order to conduct the electricity generated in the photovoltaic elements, wherein sliding contacts are arranged in the recesses (2) of the slats (7), said sliding contacts being connected to the photovoltaic elements (7a) in an electrically conductive manner and establishing an electrical connection of the photovoltaic elements (7a) to the busbars (4a, 4b, 4+, 4-, 4.z), wherein the sliding contacts are each designed as a cuff-like, annular sliding body (11) which surrounds the respective busbar(s) and in which at least one sliding coating (14) is present, which is electrically connected to the photovoltaic elements of the slat (7), **characterized in that** the sliding body (11) is movably mounted on the respective slat (7) in the longitudinal direction of the slat (7).

2. Shading device according to the preceding Claim 1, **characterized in that** exactly two busbars (4) run through each slat (7) and are electrically connected to the photovoltaic elements.

3. Shading device according to any one of the preceding claims, **characterized in that** the slats (7) each have two recesses (2), through each of which a busbar (4) runs, wherein the two busbars (4) are at different potentials.

4. Shading device according to any one of the preceding claims, **characterized in that** two busbars (4) run through a recess (2), each busbar being at a different potential.

5. Shading device according to any one of the preceding claims, **characterized in that** the sliding contacts (10) are spring-mounted.

6. Shading device according to any one of the preceding claims, **characterized in that** an electrically insulating insert is formed in the recesses (2).

7. Shading device according to any one of the preceding claims, **characterized in that** the busbars (4) are fixed at their ends in holders (20), wherein the current discharge takes place at one of the holders (20) .

8. Shading device according to any one of the preceding claims, **characterized in that** multiple sets of at least two slats (7.1, 7.2, 7.3) are electrically connected in series to form a set of slats (7) in each case, wherein the connection points (9) between the slats (7.1 with 7.2 and 7.2 with 7.3) are electrically coupled in parallel to one another via a respective busbar (4.z).

9. Shading device according to the preceding Claim 8, **characterized in that** each set of slats (7) comprises exactly two serially connected slats (7.1, 7.2), wherein:
- the equipotential connection points (9) between the first slat (7.1) and the second slat (7.2) are electrically connected via a busbar (4.z) on a first side of the shading device, and
- each set of slats (7) is electrically connected to the positive and negative busbars (4+, 4-) on the second side of the shading device opposite the first side, wherein the polarity (+, -) of the slats in the shading device alternates from top to bottom.

10. Shading device according to the preceding Claim 8, **characterized in that** each set of slats (7) comprises exactly three serially connected slats (7.1, 7.2, 7.3), wherein:
- the equipotential connection points (9) between the first slat (7.1) and the second slat (7.2) are electrically connected via a first busbar (4.z) on a first side of the shading device,
- the equipotential connection points (9) between the second slat (7.2) and the third slat (7.3) are electrically connected via a second busbar (4.z) on a second side opposite the first side of the shading device,
- each set of slats (7) is electrically connected to a positive busbar (4+) and a negative busbar (4-) on each side of the shading device.

11. Shading device according to any one of the preceding claims, wherein the slats (7) form a cover, **characterized in that** the cover comprises at least a first package of slats and a second package of slats, wherein the packages of slats are tilted differently about the respective longitudinal axes of the slats.

## Revendications

1. Dispositif d'ombrage, notamment brise-soleil ou store vénitien, avec une pluralité de lamelles (7) avec des éléments photovoltaïques pour la production de courant, et avec un système d'évacuation de courant avec au moins deux barres omnibus (4a, 4b, 4+, 4-, 4.z), qui passent à travers des évidements (2) dans les lamelles (7) et relient celles-ci entre elles de manière électriquement conductrice, afin d'évacuer le courant produit dans les éléments photovoltaïques, des contacts frotteurs étant agencés dans les évidements (2) des lamelles (7), lesquels sont reliés de manière électriquement conductrice aux éléments photovoltaïques (7a) et lesquels établissent une liaison électrique des éléments photovoltaïques (7a) avec les barres omnibus (4a, 4b, 4+, 4-, 4.z), les contacts frotteurs étant respectivement réalisés sous la forme d'un corps de frotteur (11) annulaire de type manchette, qui entoure la ou les barres omnibus respectives et dans lequel est présente au moins une garniture de frotteur (14) qui est reliée électriquement aux éléments photovoltaïques de la lamelle (7),
**caractérisé en ce que**
le corps de frotteur (11) est monté mobile sur la lamelle respective (7) dans la direction longitudinale de la lamelle (7).

2. Dispositif d'ombrage selon la revendication 1 précédente, **caractérisé en ce que** chaque lamelle (7) est traversée par exactement deux barres omnibus (4) qui sont reliées électriquement aux éléments photovoltaïques.

3. Dispositif d'ombrage selon l'une quelconque des revendications précédentes, **caractérisé en ce que** les lamelles (7) présentent chacune deux évidements (2) à travers lesquels s'étend respectivement une barre omnibus (4), les deux barres omnibus (4) étant à des potentiels différents.

4. Dispositif d'ombrage selon l'une quelconque des revendications précédentes, **caractérisé en ce que** deux barres omnibus (4), qui sont chacune à un potentiel différent, passent par un évidement (2).

5. Dispositif d'ombrage selon l'une quelconque des revendications précédentes, **caractérisé en ce que** les contacts frotteurs (10) sont conçus montés sur ressort.

6. Dispositif d'ombrage selon l'une quelconque des revendications précédentes, **caractérisé en ce qu'**un insert électriquement isolant est réalisé dans les évidements (2).

7. Dispositif d'ombrage selon l'une quelconque des revendications précédentes, **caractérisé en ce que** les barres omnibus (4) sont fixées à leurs extrémités dans des supports (20), l'évacuation de courant ayant lieu au niveau de l'un des supports (20).

8. Dispositif d'ombrage selon l'une quelconque des revendications précédentes, **caractérisé en ce que** plusieurs fois au moins deux lamelles (7.1, 7.2, 7.3) sont reliées électriquement en série entre elles pour former respectivement un jeu de lamelles (7), les points de liaison (9) entre les lamelles (7.1 avec 7.2 et 7.2 avec 7.3) étant couplés électriquement entre eux en parallèle par l'intermédiaire d'une barre omnibus (4.z).

9. Dispositif d'ombrage selon la revendication 8 précédente, **caractérisé en ce qu'**exactement deux lamelles (7.1, 7.2) montées en série sont présentes par jeu de lamelles (7) :
- les points de liaison (9) de même potentiel entre la première lamelle respective (7.1) et la deuxième lamelle (7.2) étant reliés électriquement par l'intermédiaire d'une barre omnibus (4.z) sur un premier côté du dispositif d'ombrage, et
- chaque jeu de lamelles (7) étant raccordé électriquement aux barres omnibus positives et négatives (4+, 4-) sur le deuxième côté du dispositif d'ombrage opposé au premier côté, la polarité (+, -) des lamelles dans le dispositif d'ombrage étant conçue en alternance de haut en bas.

10. Dispositif d'ombrage selon la revendication 8 précédente, **caractérisé en ce que** pour chaque jeu de lamelles (7), exactement trois lamelles (7.1, 7.2, 7.3) montées en série sont présentes :
- les points de liaison (9) de même potentiel entre la première lamelle (7.1) respective et la deuxième lamelle (7.2) étant reliés électriquement par l'intermédiaire d'une première barre omnibus (4.z) sur un premier côté du dispositif d'ombrage,
- les points de liaison (9) de même potentiel entre la deuxième lamelle (7.2) respective et la troisième lamelle (7.3) étant reliés électriquement par l'intermédiaire d'une deuxième barre omnibus (4.z) sur un deuxième côté du dispositif d'ombrage - opposé au premier côté,
- chaque jeu de lamelles (7) étant raccordé électriquement à une barre omnibus positive (4+) et à une barre omnibus négative (4-) sur un côté respectif du dispositif d'ombrage.

11. Dispositif d'ombrage selon l'une quelconque des revendications précédentes, les lamelles (7) réalisant un rideau, **caractérisé en ce que** le rideau comprend au moins un premier paquet de lamelles et un deuxième paquet de lamelles, les paquets de lamelles étant inclinés différemment autour des axes longitudinaux respectifs des lamelles.
